(19) Europäisches Patentamt / European Patent Office / Office européen des brevets

(11) **EP 3 209 905 B1**

(12) **EUROPÄISCHE PATENTSCHRIFT**

(45) Veröffentlichungstag und Bekanntmachung des Hinweises auf die Patenterteilung:
**27.10.2021 Patentblatt 2021/43**

(21) Anmeldenummer: **15766156.2**

(22) Anmeldetag: **21.09.2015**

(51) Int Cl.:
**F16H 55/08** *(2006.01)*        **F16H 55/06** *(2006.01)*

(86) Internationale Anmeldenummer:
**PCT/EP2015/071528**

(87) Internationale Veröffentlichungsnummer:
**WO 2016/062472 (28.04.2016 Gazette 2016/17)**

(54) **ZAHNRADPAARUNG EINES GETRIEBES**

GEAR PAIR OF A GEARBOX

PAIRE DE ROUES DENTÉES D'UNE TRANSMISSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.10.2014 DE 102014221456**

(43) Veröffentlichungstag der Anmeldung:
**30.08.2017 Patentblatt 2017/35**

(73) Patentinhaber: **ZF Friedrichshafen AG**
**88046 Friedrichshafen (DE)**

(72) Erfinder: **HESSE, Torsten**
**88094 Oberteuringen (DE)**

(74) Vertreter: **ZF Friedrichshafen AG**
**Gewerblicher Rechtsschutz**
**Löwentalerstraße 20**
**88046 Friedrichshafen (DE)**

(56) Entgegenhaltungen:
**EP-A1- 1 914 443        EP-A1- 1 918 612**
**DE-A1- 2 109 584        DE-A1- 19 748 964**

**Beschreibung**

Die Erfindung betrifft eine Zahnradpaarung eines Getriebes.

Getriebe, wie zum Beispiel Stirnradgetriebe, Schraubradgetriebe oder Planetengetriebe, verfügen über mindestens eine Zahnradpaarung aus einem ersten Zahnrad und einem mit dem ersten Zahnrad in Eingriff stehenden zweiten Zahnrad. Die Verzahnungsgeometrie von Zahnrädern wird durch eine Vielzahl unterschiedlicher Kenngrößen definiert, so zum Beispiel durch den sogenannten Normalmodul sowie den sogenannten Normaleingriffswinkel, wobei der Normalmodul und der Normaleingriffswinkel die sogenannte Normaleingriffsteilung definieren. Die obigen geometrischen Kenngrößen zur Charakterisierung einer Verzahnungsgeometrie sind dem hier angesprochenen Fachmann geläufig und zum Beispiel aus der DIN 21771 bekannt.

Bei aus der Praxis bekannten Zahnradpaarungen eines Getriebes verfügen das erste Zahnrad und das zweite Zahnrad über identische Normaleingriffsteilungen. Hierdurch soll ein störungsfreier Ablauf bzw. Eingriff der Zahnräder einer Zahnradpaarung gewährleistet werden.

In der DE 197 48964 A1 ist ein Zahnradpaarung eines Getriebes bekannt, mit einem ersten Zahnrad und mit einem mit dem ersten Zahnrad in Eingriff stehenden zweiten Zahnrad, wobei das erste Zahnrad aus einen anderen Werkstoff als den zweiten Zahnrad gefertigt ist.

Abweichungen in den Normaleingriffsteilungen, nämlich Abweichungen in den Normalmodulen und den Normaleingriffswinkeln, von ineinandergreifenden Zahnrädern einer Zahnradpaarung ergeben sich nach der Praxis ausschließlich infolge von Fertigungsabweichungen bzw. Fertigungstoleranzen. Für die Fertigung vorgegebene Soll-Normaleingriffsteilungen sind hingegen identisch.

Hiervon ausgehend liegt der vorliegenden Erfindung die Aufgabe zu Grunde, eine neuartige Zahnradpaarung für ein Getriebe zu schaffen.

Diese Aufgabe wird durch eine Zahnradpaarung gemäß Patentanspruch 1 gelöst. Erfindungsgemäß ist das erste Zahnrad der Zahnradpaarung aus einem im Vergleich zum zweiten Zahnrad der Zahnradpaarung weniger elastischen bzw. weniger weichen Werkstoff gefertigt, wobei das erste Zahnrad der Zahnradpaarung und das zweite Zahnrad der Zahnradpaarung unterschiedliche Soll-Normaleingriffsteilungen aufweisen.

Mit der hier vorliegenden Erfindung wird erstmals vorgeschlagen, bei einer Zahnradpaarung, die ein erstes, relativ unelastisches Zahnrad und ein zweites, relativ elastisches Zahnrad aufweist, für die Zahnräder voneinander abweichende Soll-Normaleingriffsteilungen vorzusehen. In diesem Zusammenhang ist von Bedeutung, dass die Abweichung in den Soll-Normaleingriffsteilungen der aus unterschiedlichen Werkstoffen gefertigten Zahnräder größer ist als durch Fertigungsabweichungen bzw. Fertigungstoleranzen resultierende Unterschiede in den Ist-Normaleingriffsteilungen. Erfindungsgemäß unterscheiden sich demnach die Zahnräder in den für die Fertigung vorgegebenen Soll-Normaleingriffsteilungen. Durch die Erfindung kann der Verschleiß am Zahnrad aus dem relativ elastischen Werkstoff reduziert werden. Ferner kann die Geräuschanregung an einem die Zahnradpaarung aufweisenden Getriebe reduziert werden.

Nach einer vorteilhaften Weiterbildung der Erfindung weist das erste Zahnrad aus dem relativ unelastischen Werkstoff eine kleinere Soll-Normaleingriffsteilung als das zweite Zahnrad aus dem relativ elastischen Werkstoff auf, wobei das Zahnrad aus dem relativ unelastischen Werkstoff im Vergleich zum Zahnrad aus dem relativ elastischen Werkstoff hierzu vorzugsweise einen größeren Soll-Normaleingriffswinkel aufweist, und wobei die beiden Zahnräder weiterhin vorzugweise gleiche Soll-Normalmodule aufweisen. Dann, wenn der Soll-Normaleingriffswinkel des Zahnrads aus dem relativ unelastischen Werkstoff im Vergleich zum Soll-Normaleingriffswinkel des Zahnrads aus dem relativ elastischen Werkstoff größer ist, kann hierdurch eine Pressungserhöhung im Fußbereich von Zähnen des Zahnrads aus dem relativ elastischen Werkstoff reduziert werden, wodurch der Verschleiß am Zahnrad aus dem relativ elastischen Werkstoff besonders vorteilhaft reduziert werden kann. In diesem Zusammenhang ist von Bedeutung, dass die Abweichung in den Soll-Normaleingriffswinkeln der aus unterschiedlichen Werkstoffen gefertigten Zahnräder größer ist als durch Fertigungsabweichungen bzw. Fertigungstoleranzen resultierende Unterschiede in den Ist-Normaleingriffswinkeln. Es unterscheiden sich demnach die Zahnräder in den für die Fertigung vorgegebenen Soll-Normaleingriffswinkeln.

Nach einer vorteilhaften Weiterbildung der Erfindung ist eine Abweichung zwischen der Soll-Normaleingriffsteilung des ersten Zahnrads und der Soll-Normaleingriffsteilung des zweiten Zahnrad, insbesondere eine Winkelabweichung zwischen dem Soll-Normaleingriffswinkel des ersten Zahnrads und dem Soll-Normaleingriffswinkel des zweiten Zahnrads, von Betriebsbelastungen der Zahnradpaarung und/oder von Betriebstemperaturen der Zahnradpaarung und/oder von der Werkstoffpaarung der Zahnradpaarung abhängig. Die Bestimmung der Abweichung zwischen den Soll-Normaleingriffsteilungen, insbesondere der Winkelabweichung zwischen den Soll-Normaleingriffswinkeln, der aus unterschiedlich elastischen Werkstoffen gefertigten Zahnräder der Zahnradpaarung abhängig Betriebsbelastungen und/oder Betriebstemperaturen und/oder Werkstoffpaarungen der jeweiligen Zahnradpaarung ist besonders vorteilhaft.

Nach einer weiteren vorteilhaften Weiterbildung der Erfindung weisen das ersten Zahnrad und das zweite Zahnrad gleiche Soll-Normalmodule auf. Dann, wenn ausschließlich die Soll-Normaleingriffswinkel voneinander abweichen, jedoch die Zahnräder gleiche Soll-Normalmodule aufweisen, ist bei geringem Verschleiß ein besonders vorteilhafter Eingriff der Zahnräder der Zahnradpaarung gewährleistet.

Nach einer weiteren Weiterbildung der Erfindung ist das erste Zahnrad aus dem relativ unelastischen Werkstoff aus einem Metall und das zweite Zahnrad aus dem relativ elastischen Werkstoff aus einem Kunststoff gefertigt. Die Erfindung eignet sich besonders vorteilhaft zur Anwendung einer Zahnradpaarung, bei welcher das erste, relativ unelastische Zahnrad aus einem metallischen Werkstoff und das zweites, relativ elastische Zahnrad aus einem Kunststoff gefertigt ist.

Vorzugsweise handelt es sich bei dem Getriebe, welches mindestens eine erfindungsgemäße Zahnradpaarung aufweist, um ein Stirnradgetriebe oder um ein Schraubradgetriebe oder um ein Planetengetriebe.

Bevorzugte Weiterbildungen ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

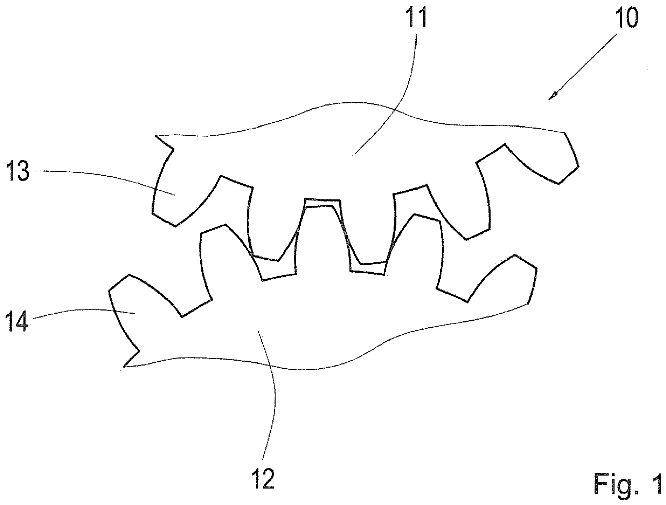

Fig. 1     einen schematisierten Ausschnitt aus einer Zahnradpaarung eines Stirnradgetriebes.

Die hier vorliegende Erfindung betrifft eine Zahnradpaarung eines Getriebes, so zum Beispiel eine Evolventen-Zahnradpaarung eines Stirnradgetriebes oder Schraubradgetriebes oder Planetengetriebes.

Fig. 1 zeigt einen schematisierten Ausschnitt aus einer Zahnradpaarung eines Stirnradgetriebes mit einem ersten Zahnrad 11 und einem mit dem ersten Zahnrad 11 in Eingriff stehenden zweiten Zahnrad 12. Das erste Zahnrad 11 weist Zähne 13 und das zweite Zahnrad 12 weist Zähne 14 auf, die miteinander in Eingriff stehen.

Die Verzahnungsgeometrie eines solchen Evolventen-Zahnradpaars 10 wird durch eine Vielzahl von Kenngrößen definiert, die dem hier angesprochenen Fachmann grundsätzlich bekannt sind und sich zum Beispiel aus der DIN 21771 ergeben. Als Kenngrößen zur Charakterisierung einer Verzahnungsgeometrie von Zahnrädern sei an dieser Stelle der sogenannte Normalmodul und der sogenannte Normaleingriffswinkel genannt, von welchen die Normaleingriffsteilung abhängig ist.

Die Normaleingriffsteilung bestimmt sich dabei nach folgender Gleichung:

$$p_{en} = \pi * m_n * \cos(\alpha_n)$$

wobei $p_{en}$ die Normaleingriffsteilung ist, wobei $m_n$ der Normalmodul ist, und wobei $\alpha_n$ der Normaleingriffswinkel ist.

Für die Fertigung von Zahnrädern werden jeweils ein Soll-Normalmodul und ein Soll-Normaleingriffswinkel vorgegeben. Infolge von Fertigungsabweichungen bzw. Fertigungstoleranzen bilden sich ein Ist-Normalmodul und ein Ist-Normaleingriffswinkel am jeweiligen Zahnrad aus. Auch dann, wenn demnach für die Fertigung von Zahnrädern identische Soll-Normalmodule und Soll-Normaleingriffswinkel vorgegeben werden, können sich infolge der Fertigungstoleranzen bzw. Fertigungsabweichungen voneinander abweichende Ist-Normalmodule und Ist-Normaleingriffswinkel ausbilden.

Die hier vorliegende Erfindung betrifft eine Zahnradpaarung 10, die ein erstes Zahnrad 11 aus einem relativ unelastischen Werkstoff, insbesondere einem metallischen Werkstoff, und ein zweites Zahnrad 12 aus einem relativ elastischen Werkstoff, insbesondere aus einem Kunststoff, aufweist.

Erfindungsgemäß wird vorgeschlagen, dass das erste Zahnrad 11 und das zweite Zahnrad 12, die aus unterschiedlich elastischen Werkstoffen gefertigt sind, unterschiedliche Soll-Normaleingriffsteilungen aufweisen. Die Abweichungen der Soll-Normaleingriffsteilungen sind nicht mit Abweichungen der Ist-Normaleingriffsteilungen zu vergleichen, die sich aufgrund von Fertigungstoleranzen bzw. Fertigungsabweichungen ausbilden können. Vielmehr weisen die Zahnräder der erfindungsgemäßen Zahnradpaarung unterschiedliche Soll-Normaleingriffsteilungen auf. Es werden demnach für die Fertigung gezielt voneinander abweichende Soll- Normaleingriffsteilungen für die Zahnräder der Zahnradpaarung definiert.

Vorzugsweise weist das erste Zahnrad aus dem relativ unelastischen Werkstoff eine kleinere Soll-Normaleingriffsteilung, besonders bevorzugt einen größeren Soll-Normaleingriffswinkel, als das zweite Zahnrad aus dem relativ elastischen Werkstoff auf. Es sei nochmals ausgeführt, dass die Abweichungen der Soll-Normaleingriffswinkel nicht mit Abweichungen der Ist-Normaleingriffswinkeln zu vergleichen sind, die sich aufgrund von Fertigungstoleranzen bzw. Fertigungsabweichungen ausbilden können. Vielmehr weisen die Zahnräder der Zahnradpaarung unterschiedliche Soll-Normaleingriffswinkel auf. Es werden demnach für die Fertigung gezielt voneinander abweichende Soll-Normaleingriffswinkel für die Zahnräder der Zahnradpaarung definiert.

Dadurch, dass das Zahnrad aus dem relativ unelastischen Werkstoff einen größeren Soll-Normaleingriffswinkel und damit auch größeren Ist-Normaleingriffswinkel aufweist als das Zahnrad aus dem relativ elastischen Werkstoff, kann in einem Fußbereich der Zähne des Zahnrads aus dem relativ elastischen Werkstoff eine Pressungserhöhung reduziert werden, wodurch die Verschleißanfälligkeit des Zahnrads aus dem relativ elastischen Werkstoff reduziert werden kann. Ferner kann die Geräuschanregung an einem die Zahnradpaarung aufweisenden Getriebe reduziert werden.

Es liegt demnach im Sinne der hier vorliegenden Erfindung, dass bei einer Zahnradpaarung 10 aus zwei Zahnrädern 11, 12, die aus Werkstoffen unterschiedlicher Elastizität gefertigt sind, die Zahnräder unterschiedliche Soll-Normaleingriffsteilungen, vorzugsweise unterschiedliche Soll-Normeingriffswinkel, und damit auch unterschiedliche Ist-Normaleingriffsteilungen, vorzugsweise unterschiedliche Ist-Normeingriffswinkel aufweisen. Die Abweichung in den Soll-Normaleingriffsteilungen, vorzugsweise in den Soll-Normaleingriffswinkeln, und damit auch die hieraus resultierende Abweichung in den Ist-Normaleingriffsteilungen, vorzugsweise in den Ist-Normaleingriffswinkeln, der aus unterschiedlichen Werkstoffen gefertigten Zahnräder 11, 12 ist größer als durch Fertigungsabweichungen bzw. Fertigungstoleranzen resultierende Unterschiede in den Ist-Normaleingriffsteilungen, vorzugsweise in den Ist-Normaleingriffswinkeln.

Dabei weist das Zahnrad der Zahnradpaarung, das aus dem relativ unelastischen Werkstoff gefertigt ist, im Vergleich zu dem Zahnrad der Zahnradpaarung, das aus dem relativ elastischen Werkstoff gefertigt ist, eine kleinere Soll-Normaleingriffsteilung, insbesondere einen größeren Soll-Normaleingriffswinkel, und damit auch eine kleinere Soll-Normaleingriffsteilung, insbesondere einen größeren Ist-Normaleingriffswinkel ,auf.

Vorzugsweise sind die Soll-Normalmodule der Zahnräder 10, 11 der Zahnradpaarung 10 identisch.

Die Abweichung zwischen den Soll-Normaleingriffsteilungen, insbesondere die Winkelabweichung zwischen den Soll-Normaleingriffswinkeln, der Zahnräder 11, 12 der Zahnradpaarung 10 ist abhängig von der Betriebsbelastung der Zahnradpaarung 10 und/oder abhängig von der Betriebstemperatur der Zahnradpaarung 10 und/oder abhängig von der Werkstoffpaarung der Zahnradpaarung 10.

Weiterhin kann diese Abweichung zwischen den Soll-Normaleingriffsteilungen, insbesondere diese Winkelabweichung zwischen den Soll-Normaleingriffswinkeln, der Zahnräder 11, 12 der Zahnradpaarung 10 auch von der Größe des Getriebes, in welcher die Zahnradpaarung zum Einsatz kommt, abhängig sein.

In einer vorteilhaften Weiterbildung der Erfindung kann vorgesehen sein, dass sich die Zahnräder 11, 12 der Zahnradpaarung 10, die aus Werkstoffen mit unterschiedlicher Elastizität gefertigt sind, zusätzlich hinsichtlich ihrer Soll-Kopfrundungen und/oder Soll-Kopfrücknahmen unterscheiden.

Bei der erfindungsgemäßen Zahnradpaarung 10 handelt es sich um eine Zahnradpaarung eines Getriebes, insbesondere eines evolventischen Stirnradgetriebes oder evolventischen Schraubradgetriebes oder evolventischen Planetengetriebes.

Für die Erfindung ist von Bedeutung, dass ein Zahnrad der Zahnradpaarung aus einem elastischerem Werkstoff besteht als ein mit demselben in Eingriff stehendes Zahnrad, wobei das elastischere Zahnrad vorzugsweise durch einen kleineren Soll-Normaleingriffswinkel gekennzeichnet ist. Die Soll-Normalmodule der Zahnräder sind vorzugsweise identisch.

Bezugszeichen

| 10 | Zahnradpaarung |
| 11 | Zahnrad |
| 12 | Zahnrad |
| 13 | Zahn |
| 14 | Zahn |

**Patentansprüche**

1.  Zahnradpaarung (10) für ein Getriebe, mit einem ersten Zahnrad (11) und mit einem mit dem ersten Zahnrad (11) in Eingriff stehenden zweiten Zahnrad (12), wobei das erste Zahnrad (11) aus einem im Vergleich zum zweiten Zahnrad (12) weniger elastischen bzw. weniger weichen Werkstoff gefertigt ist, **dadurch gekennzeichnet, dass** das erste Zahnrad (11) und das zweite Zahnrad (12) unterschiedliche Soll-Normaleingriffsteilungen aufweisen.

2.  Zahnradpaarung nach Anspruch 1, **dadurch gekennzeichnet dass** das erste Zahnrad (11) eine kleinere Soll-Normaleingriffsteilung als das zweite Zahnrad (12) aufweist.

3.  Zahnradpaarung nach Anspruch 1, **dadurch gekennzeichnet dass** das erste Zahnrad (11) einen größeren Soll-Normaleingriffswinkel als das zweite Zahnrad (12) aufweist.

4.  Zahnradpaarung nach Anspruch 1, **dadurch gekennzeichnet, dass** das erste Zahnrad (11) und das zweite Zahnrad (12) gleiche Soll-Normalmodule aufweisen.

5.  Zahnradpaarung nach einem der Ansprüche 1 bis 4, **dadurch gekennzeichnet, dass** das erste Zahnrad (11) aus einem Metall gefertigt ist und dass das zweite Zahnrad (12) aus einem Kunststoff gefertigt ist.

6.  Zahnradpaarung nach einem der Ansprüche 1 bis 5, **dadurch gekennzeichnet, dass** eine Abweichung zwischen der Soll-Normaleingriffsteilung des ersten Zahnrads (11) und der Soll-Normaleingriffsteilung des zweiten Zahnrads (12) von Betriebsbelastungen der Zahnradpaarung und/oder Betriebstemperaturen der Zahnradpaarung und/oder von der Werkstoffpaarung der Zahnradpaarung abhängig ist.

7.  Zahnradpaarung nach einem der Ansprüche 3 bis 6, **dadurch gekennzeichnet, dass** eine Winkelabweichung zwischen dem Soll-Normaleingriffswinkel des ersten Zahnrads (11) und dem Soll-Normaleingriffswinkel des zweiten Zahnrads (12) von Betriebsbelastungen der Zahnradpaarung und/oder Betriebstemperaturen der Zahnradpaarung und/oder von der Werkstoffpaarung der Zahnradpaarung abhängig ist.

8. Zahnradpaarung nach einem der Ansprüche 1 bis 7, **dadurch gekennzeichnet, dass** sich das erste Zahnrad (11) und das zweiten Zahnrad (12) weiterhin hinsichtlich einer Soll-Kopfverrundung und/oder einer Soll-Kopfrücknahme unterscheiden.

9. Zahnradpaarung nach einem der Ansprüche 1 bis 8, **dadurch gekennzeichnet, dass** das erste Zahnrad (11) und/oder das zweite Zahnrad (12) Evolventen-Verzahnungen aufweisen.

10. Stirnradgetriebe, mit mindestens einer Zahnradpaarung (10) nach einem der Ansprüche 1 bis 9.

11. Schraubradgetriebe, mit mindestens einer Zahnradpaarung (10) nach einem der Ansprüche 1 bis 9.

12. Planetengetriebe, mit mindestens einer Zahnradpaarung (10) nach einem der Ansprüche 1 bis 9.

**Claims**

1. Gearwheel pairing (10) for a transmission, with a first gearwheel (11) and with a second gearwheel (12) which is in engagement with the first gearwheel (11), the first gearwheel (11) being manufactured from a material which is less elastic and/or less soft in comparison with the second gearwheel (12), **characterized in that** the first gearwheel (11) and the second gearwheel (12) have different setpoint normal engagement pitches.

2. Gearwheel pairing according to Claim 1, **characterized in that** the first gearwheel (11) has a smaller setpoint normal engagement pitch than the second gearwheel (12).

3. Gearwheel pairing according to Claim 1, **characterized in that** the first gearwheel (11) has a greater setpoint normal engagement angle than the second gearwheel (12).

4. Gearwheel pairing according to Claim 1, **characterized in that** the first gearwheel (11) and the second gearwheel (12) have identical setpoint normal modules.

5. Gearwheel pairing according to one of Claims 1 to 4, **characterized in that** the first gearwheel (11) is manufactured from a metal, and **in that** the second gearwheel (12) is manufactured from a plastic.

6. Gearwheel pairing according to one of Claims 1 to 5, **characterized in that** a deviation between the setpoint normal engagement pitch of the first gearwheel (11) and the setpoint normal engagement pitch of the second gearwheel (12) is dependent on operating loads of the gearwheel pairing and/or operating temperatures of the gearwheel pairing and/or on the material pairing of the gearwheel pairing.

7. Gearwheel pairing according to one of Claims 3 to 6, **characterized in that** an angular deviation between the setpoint normal engagement angle of the first gearwheel (11) and the setpoint normal engagement angle of the second gearwheel (12) is dependent on operating loads of the gearwheel pairing and/or operating temperatures of the gearwheel pairing and/or on the material pairing of the gearwheel pairing.

8. Gearwheel pairing according to one of Claims 1 to 7, **characterized in that** the first gearwheel (11) and the second gearwheel (12) differ, furthermore, with regard to a setpoint tip rounding and/or a setpoint tip recess.

9. Gearwheel pairing according to one of Claims 1 to 8, **characterized in that** the first gearwheel (11) and/or the second gearwheel (12) have/has involute toothing systems.

10. Spur gear mechanism, with at least one gearwheel pairing (10) according to one of Claims 1 to 9.

11. Helical gear mechanism, with at least one gearwheel pairing (10) according to one of Claims 1 to 9.

12. Planetary gear mechanism, with at least one gearwheel pairing (10) according to one of Claims 1 to 9.

**Revendications**

1. Appariement de pignons (10) pour une transmission, comprenant un premier pignon (11) et un deuxième pignon (12) en prise avec le premier pignon (11), le premier pignon (11) étant fabriqué à partir d'un matériau moins élastique ou moins souple en comparaison avec le deuxième pignon (12),
**caractérisé en ce que** le premier pignon (11) et le deuxième pignon (12) présentent différents pas de base réels de consigne.

2. Appariement de pignons selon la revendication 1, **caractérisé en ce que** le premier pignon (11) présente un pas de base réel de consigne plus petit que celui du deuxième pignon (12).

3. Appariement de pignons selon la revendication 1, **caractérisé en ce que** le premier pignon (11) présente un pas de base réel de consigne plus grand que celui du deuxième pignon (12).

4. Appariement de pignons selon la revendication 1, **caractérisé en ce que** le premier pignon (11) et le deuxième pignon (12) présentent des modules réels de consigne identiques.

5. Appariement de pignons selon l'une quelconque des revendications 1 à 4, **caractérisé en ce que** le premier pignon (11) est fabriqué en métal, et **en ce que** le deuxième pignon (12) est fabriqué en matière synthétique.

6. Appariement de pignons selon l'une quelconque des revendications 1 à 5, **caractérisé en ce qu'**un écart entre le pas de base réel de consigne du premier pignon (11) et le pas de base réel de consigne du deuxième pignon (12) dépend de charges de fonctionnement de l'appariement de pignons et/ou de températures de fonctionnement de l'appariement de pignons et/ou de la combinaison des matériaux de l'appariement de pignons.

7. Appariement de pignons selon l'une quelconque des revendications 3 à 6, **caractérisé en ce qu'**un écart angulaire entre l'angle de pression réel de consigne du premier pignon (11) et l'angle de pression réel de consigne du deuxième pignon (12) dépend de charges de fonctionnement de l'appariement de pignons et/ou de températures de fonctionnement de l'appariement de pignons et/ou de la combinaison des matériaux de l'appariement de pignons.

8. Appariement de pignons selon l'une quelconque des revendications 1 à 7, **caractérisé en ce que** le premier pignon (11) et le deuxième pignon (12) sont en outre différents en termes d'arrondi de tête de consigne et/ou de dépouille de tête de consigne.

9. Appariement de pignons selon l'une quelconque des revendications 1 à 8, **caractérisé en ce que** le premier pignon (11) et/ou le deuxième pignon (12) présente(nt) des dentures à développante.

10. Réducteur à engrenage droit, comprenant au moins un appariement de pignons (10) selon l'une quelconque des revendications 1 à 9.

11. Réducteur à engrenage gauche, comprenant au moins un appariement de pignons (10) selon l'une quelconque des revendications 1 à 9.

12. Engrenage épicycloïdal, comprenant au moins un appariement de pignons (10) selon l'une quelconque des revendications 1 à 9.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19748964 A1